# EUROPEAN PATENT SPECIFICATION

(11) **EP 4 261 848 B1**
(45) Date of publication and mention of the grant of the patent: **01.04.2026**
(21) Application number: 21902723.2
(22) Date of filing: 10.12.2021
(51) Int. Cl.: H01B 7/04, H01B 7/06, B60R 16/02

(54) **FLEXIBLE ALUMINUM CONDUCTIVE WIRE BODY, CONDUCTIVE PIECE, AND CAR**
FLEXIBLER LEITFÄHIGER ALUMINIUMDRAHTKÖRPER, LEITFÄHIGES TEIL UND FAHRZEUG
CORPS DE FIL CONDUCTEUR EN ALUMINIUM FLEXIBLE, PIÈCE CONDUCTRICE ET VOITURE

(30) Priority: 11.12.2020 CN 202022990990 U
(43) Date of publication of application: 18.10.2023
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2021/137101
(87) International publication number: WO 2022/122018

(56) References cited:
- WO-A1-2016/154101
- CA-A1- 3 044 310
- CN-A- 102 360 611
- CN-A- 102 360 611
- CN-A- 105 448 400
- CN-A- 108 417 305
- CN-A- 111 768 915
- CN-U- 204 808 906
- CN-U- 204 808 906
- CN-U- 207 852 336
- CN-U- 214 823 060
- JP-A- 2006 004 760
- US-A- 5 414 211
- US-A1- 2015 034 381
- US-B1- 10 232 809
- US-B2- 10 348 009

## Description

### RELATED APPLICATION

The present disclosure claims the priority to the Chinese Utility Model Patent Application No. 202022990990.1, filed on December 11, 2020, entitled 'flexible aluminum conductive wire body, conductive member and automobile'.

### TECHNICAL FIELD

The present disclosure relates to the technical field of electrical connections, and particularly to a flexible aluminum conductive wire body, a conductive member and an automobile.

### BACKGROUND

An automobile includes a shell, electrical devices, and a power supply, etc. There are many electrical devices in the automobile, such as a starting system, an ignition system, a lighting system, a signal apparatus, an instrument and alarm apparatus, an auxiliary electrical device and an automobile electronic control system, etc. With the continuous development of automobile electronic technologies, more and more electronic devices are applied to the automobile to improve the safety, comfort and convenience thereof. Wire harnesses connected between the power supply and the electrical device, or between the electrical devices, are the main part of the circuit of the automobile, and the function of the wire harness is very important. The structure and performance of the wire harness will influence the overall structure and performance of the automobile. The enameled wire and the processing technology thereof are known in the prior art, e.g. from CN108417305. The wire body to be used inside a vehicle is known in the prior art, e.g. from CN204808906. The braided tape made of copper is known in the prior art, e.g. from CN102360611. The flexible circuits for electrical harnesses is known in the prior art, e.g. from US10348009. The irregular-shaped cable and a method for manufacturing the cable is known in the prior art, e.g. from CA3044310. A vehicle circuit body is known in the prior art, e.g. from US10232809Bl. A device and method for shielding an electrically conductive cable from electromagnetic interference are known in the prior art, e.g. from US5414211Al. A hybrid cable with flat power conductors is known in the prior art, e.g. from US20150034381Al. A connector for flexible busbar and a method of connecting are known in the prior art, e.g. from WO2016/154101A1.

A conventional wire harnesses for automobiles mostly use copper conductive cores, but the copper conductive cores are heavy in weight and high in cost. Now people also use aluminum with relatively light weight and relatively low cost as the conductive cores for the harnesses of automobiles. Aluminum conductive wire bodies, such as aluminum bars and flat aluminum wires, which adopt integrated aluminum conductor cores, have been widely used in automobiles.

However, there is a problem that since the flexibility is poor, the aluminum conductive wire body needs to fit the shell during long-distance wiring and be bent according to the profile of the shell, and when an obstacle is encountered, it is even necessary to open a hole in the aluminum conductive wire body in order to avoid a large bending radius, such that the mounting of the aluminum conductive wire body is inconvenient. In addition, when a plurality of aluminum wires included in the aluminum conductive core are interleaved with each other, there is a problem that the strength of the aluminum conductive core and the reliability of the aluminum conductive wire body are not guaranteed.

### SUMMARY

The present invention is defined by the independent claim 1. Further embodiments are set forth in the dependent claims. The present disclosure aims to provide a flexible aluminum conductive wire body, a conductive member and an automobile, so as to solve the existing technical problem of poor flexibility of an aluminum conductive wire body to a certain extent.

The invention is set out in the appended set of claims.

Under the same current carrying capacity, compared with an integrally formed aluminum conductive core (e.g., a solid aluminum flat tape, a solid aluminum bar, etc.), the aluminum foil composite structural member or the aluminum wire composite structural member has a small deformation resistance and a good scalability due to a gap in its own structure, and the aluminum foil or the aluminum wire itself has a good flexibility, so that the aluminum conductive core can have a good flexibility, and then the flexible aluminum conductive wire body according to this embodiment is flexible and easily deformable. When the conductive wire body according to this embodiment is used as a wire harness for electrical connection and arranged on a shell of an automobile, the flexible aluminum conductive wire body can be deformed along with the shape of the shell to avoid being bend. When encountering an obstacle, the flexible aluminum conductive wire body can bypass the obstacle according to the shape of the obstacle, thereby avoiding machining a hole in the wire body. In addition, the flexible aluminum conductive wire body can be arranged according to the automobile body environment, so that the mounting is easy and the space is saved, which is beneficial to reducing the cost of working hours.

The aluminum wire composite structural member is a braided tape, that is, the aluminum wire composite structural member is formed by interweaving aluminum wires with each other. The braided tape has a good flexibility, and the aluminum wire composite structural member has a strong integrity, so that it is convenient to extrude or inject the insulating layer outside the aluminum wire composite structural member.

The braided tape formed by interweaving multiple strands of aluminum wire bundles enables simple processing while ensuring a good flexibility, thereby improving the production efficiency of the flexible aluminum conductive wire body. In addition, the aluminum conductive core is disposed as a flat shape, the insulating layer is correspondingly disposed as a flat shape, that is, the flexible aluminum conductive wire body is disposed as a flat shape, and it may be understood as that a flexible conductive wire body is a flexible aluminum flat tape. The flat flexible aluminum conductive wire body can better fit the shell of the automobile, so it may be applied to sharp bending or a negative angle of a bending radius to maintain a stable shape of the cross section.

Each of the aluminum foil layers has same specifications, that is, each of the aluminum foil layers has the same width and thickness. The cross section of the aluminum foil composite structural member is disposed as rectangular, which is simple in structure and easy to process.

In addition, the aluminum conductive core is disposed as a flat shape, the insulating layer is correspondingly disposed as a flat shape, that is, the flexible aluminum conductive wire body is disposed as a flat shape, and it may be understood as that the flexible conductive wire body is a flexible aluminum flat tape. The flat flexible aluminum conductive wire body can better fit the shell of the automobile, so it may be applied to sharp bending or a negative angle of a bending radius to maintain a stable shape of the cross section.

By disposing the sealing member at a joint between the connecting member and the aluminum conductive core, or at a position where a conductor of the conductive member is exposed, or at the both position, the sealing performance of the conductive member can be improved, and the normal use of the conductive member can be ensured.

A position less than 397.5 mm away from the joint between the connecting member and the aluminum conductive core is taken as a fixing point, at which the conductive member is fixedly connected to the shell by the fixing member, thereby ensuring the stability of the joint between the connecting member and the aluminum conductive core, and avoiding the affection of connection failure on the electrical connection.

The conductive member is disposed away from the heating portion (e.g., a heat source such as an engine) on the automobile. The fixing member is disposed at a position more than 8.05 mm and less than or equal to 500 mm away from the heating portion, and when the conductive member is disposed at the above position, it is possible to prevent the conductive member from being affected by the heat source.

It should be understood that both the foregoing general descriptions and the following specific embodiments aiming at illustration and description and are not intended to limit the present disclosure. The drawings, which are incorporated in and constitute a part of the specification, illustrate the subject matter of the present disclosure. Meanwhile, the specification and the drawings serve to explain the principles of the present disclosure.

### BRIEF DESCRIPTION OF THE DRAWINGS

For a clearer illustration of technical features in the embodiments of the present disclosure, a brief description of the drawings for the embodiments will be given below. Obviously, the drawings described below involve only some embodiments of this disclosure. For those of ordinary skill in the art, other drawings can be derived from these drawings without any inventive efforts.
FIG. 1 illustrates a structural diagram of a flexible aluminum conductive wire body according to the present disclosure:
FIG. 2 illustrates a structural diagram of a flexible aluminum conductive wire body according to a second embodiment of the present disclosure;
FIG. 3 illustrates a structural diagram of a flexible aluminum conductive wire body according to a third embodiment of the present disclosure;
FIG. 4 illustrates a structural diagram of a flexible aluminum conductive wire body according to a fourth embodiment of the present disclosure;
FIG. 5 illustrates a structural diagram of a flexible aluminum conductive wire body according to a fifth embodiment of the present disclosure;
FIG. 6 illustrates a structural diagram of a conductive member according to a first embodiment of the present disclosure;
FIG. 7 illustrates a structural diagram of a conductive member according to a second embodiment of the present disclosure;
FIG. 8 illustrates a structural diagram of a conductive member according to a third embodiment of the present disclosure;
FIG. 9 illustrates a structural diagram of an automobile according to an embodiment of the present disclosure.

### DETAILED DESCRIPTION

The technical solutions in the embodiments of the present disclosure will be clearly and completely described below in conjunction with the drawings. Obviously, those described are merely a part, rather than all, of the embodiments of the present disclosure.

The components of the embodiments of the present disclosure generally described and illustrated in the drawings herein can be arranged and designed in various configurations.

In the description of the present disclosure, it should be noted that the terms 'first' and 'second' are only used for descriptive purposes and cannot be construed as indicating or implying relative importance.

It should be noted that the flexible aluminum conductive wire body according to the present disclosure may be used in, but not limited to, automobiles, and may also be applied in other fields requiring electrical connections.

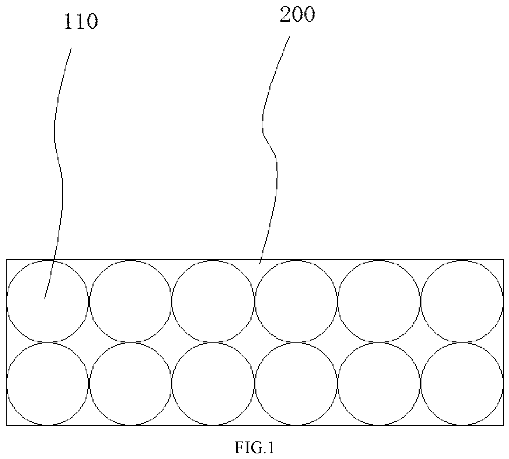

As illustrated in FIGS. 1 to 4, the present disclosure provides a flexible aluminum conductive wire body, which includes an aluminum conductive core 100 and an insulating layer 200 wrapped outside the aluminum conductive core 100; the aluminum conductive core 100 includes an aluminum wire composite structural member 110 and an aluminum foil composite structural member 120.

In this embodiment, under the same current carrying capacity, compared with an integrally formed aluminum conductive core (e.g., a solid aluminum flat tape, and a solid aluminum bar, etc.), the aluminum foil composite structural member 120 or the aluminum wire composite structural member 110 has a small deformation resistance and a good scalability due to a gap in its own structure. And the aluminum foil or the aluminum wire itself has a good flexibility, so that the aluminum conductive core can have a good flexibility, thus the flexible aluminum conductive wire body according to this embodiment is very flexible and easily deformable. When the conductive wire body according to this embodiment is used as a wire harness for electrical connection and arranged on a shell 01 of an automobile, the flexible aluminum conductive wire body can be deformed along with the shape of the shell 01 to avoid being bent. When encountering an obstacle, the flexible aluminum conductive wire body can bypass the obstacle according to the shape of the obstacle, thereby avoiding machining a hole in the conductive wire body. In addition, the flexible aluminum conductive wire body may be arranged according to an automobile body environment, so that the mounting is easy and the space is saved, which is beneficial to reducing the cost of working hours.

It should be noted that, as the thickness of the selected aluminum foil decreases within an allowable range, the flexibility of the aluminum foil composite structural member 120 increases, so the flexibility of the flexible aluminum conductive wire body increases, and the mounting is easier. As the thickness of the selected aluminum wire decreases within an allowable range, the flexibility of the aluminum wire composite structural member 110 increases, so the better the flexibility of the flexible aluminum conductive wire body, the easier it is to mount.

In which, the insulating layer 200 may be made of various materials, which may be selected according to the specific application environment (e.g., a high-temperature resistant insulating material, a wear-resistant insulating material or a soft insulating material may be used), such as SIR (silicone rubber), PVC (polyvinyl chloride), XLPE (crosslinked polyethylene), TPE-E (polyester elastomer), TPE-S (styrene block copolymer), TEE-U (polyurethane PUR), PPB (polyamide), PP (polypropylene), PE (polyethylene) or EP (epoxy resin), etc.

The aluminum conductive core 100 includes the aluminum wire composite structural member 110 which may have various structural forms. For example, the aluminum wire composite structural member 110 may include a single aluminum wire layer including a plurality of aluminum wires laid in parallel.

For another example, as illustrated in FIG. 1, the aluminum wire composite structural member 110 includes a plurality of aluminum wire layers stacked along a thickness direction of the aluminum conductive core 100, and each of the aluminum wire layers includes a plurality of aluminum wires. The number of the aluminum wires included in each of the aluminum wire layers may be the same or different, and may be disposed according to the shape of a cross section of the aluminum wire composite structural member 110. For example, the cross section of the aluminum wire composite structural member 110 is circular, quadrilateral, or pentagonal, etc. The aluminum wire composite structural member 110 is disposed as a flat shape, and the insulating layer 200 wrapped outside the aluminum wire composite structural member 110 is correspondingly disposed as a flat shape, so that a flat flexible aluminum conductive wire body is formed. The flat flexible aluminum conductive wire body better fits the shell 01 of the automobile and may be applied to sharp bending or a negative angle of a bending radius to maintain a stable shape of the cross section. The cross section of the flat aluminum wire composite structural member may be elliptical or rectangular.

The aluminum wire composite structural member 110 is a braided tape, which means that the aluminum wire composite structural member 110 is formed by interweaving the aluminum wires with each other. In this embodiment, the braided tape is more flexible, and the aluminum wire composite structural member 110 has a strong integrity, so that it is convenient to extrude or inject the insulating layer 200 outside the aluminum wire composite structural member 110.

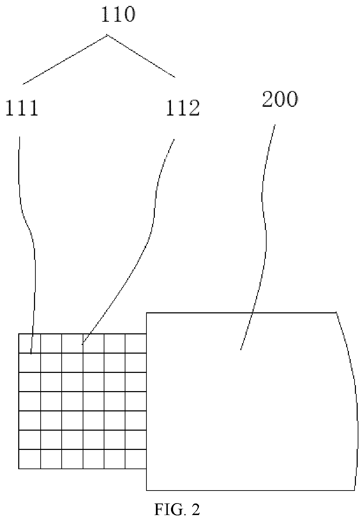

In which, the braided tape has various structural forms. As illustrated in FIG. 2, the braided tape includes longitudinal aluminum wires 111 and transverse aluminum wires 112 which are alternately arranged to form a flat braided tape. In this embodiment, the flat flexible conductive wire body formed by the flat aluminum wire composite structural member 110 can better fit the shell 01 of the automobile, and may be applied to sharp bending or a negative angle of a bending radius to maintain a stable shape of the cross section. A lengthwise direction of the longitudinal aluminum wire 111 is intersected with a lengthwise direction of the transverse aluminum wire 112. In which, it is possible to interweave a single longitudinal aluminum wire 111 and a single transverse aluminum wire 112; or form a plurality of longitudinal aluminum wires 111 into one strand and a plurality of transverse aluminum wires 112 into one strand, and then interweave the strand of the longitudinal aluminum wires and the strand of the transverse aluminum wires.

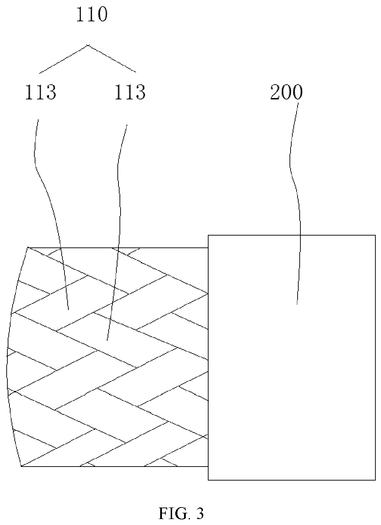

The braided tape includes multiple strands of aluminum wire bundles 113, each of which includes a plurality of aluminum wires. The multiple strands of aluminum wire bundles 113 are interwoven with each other to form a flat braided tape, such as: a plain-woven tape is formed. As an optional solution, as illustrated in FIG. 3, multiple strands of aluminum wire bundles 113 are interwoven with each other to form a flat twill braided tape, that is, the multiple strands of aluminum wire bundles 113 are formed into a twill braided tape by a twill weaving method.

In this embodiment, the twill braided tape formed by interweaving the multiple strands of aluminum wire bundles 113 with each other is more flexible, and can be easily processed while ensuring a good flexibility, thereby improving the production efficiency of the flexible aluminum conductive wire body. Moreover, since the aluminum conductive core 100 is disposed as a flat shape, the insulating layer 200 is correspondingly disposed as a flat shape, that is, the flexible aluminum conductive wire body is disposed as a flat shape, which be understood that the flexible conductive wire body is a flexible aluminum flat tape. The flat flexible aluminum conductive wire body can better fit the shell of the automobile, so it may be applied to sharp bending or a negative angle of a bending radius to maintain a stable shape of the cross section.

In which, the number of the strands of the aluminum wire bundles 113 may be disposed as needed. The number of the aluminum wires included in each of the aluminum wire bundles 113 may be completely different; or some of the aluminum wire bundles 113 may include the same number of aluminum wires and other aluminum wire bundles 113 may include different numbers of aluminum wires. Optionally, the number of the aluminum wires included in each of the aluminum wire bundles 113 is the same, so that the specifications of the aluminum wire bundles 113 are uniform to facilitate processing and manufacturing.

It should be noted that the total number of the aluminum wires may be disposed according to the current carrying capacity. The number of the aluminum braided tapes may be one or more.

A plurality of aluminum wire bundles are disposed to be interleaved with each other, so that the plurality of aluminum wires are also interleaved with each other, with an overlapping zone formed between two interleaved aluminum wires, and an area of the overlapping zone accounts for at least 2.05% of a cross-sectional area of the aluminum wire, such as 2.05%, 5%, 10%, 16% or 20%, etc. The area of the overlapping zone between the aluminum wires accounts for at least 2.05% of the cross-sectional area of the aluminum wire, so that the strength of the aluminum conductive core can be ensured, and the number of the broken aluminum wires is small after multiple times of bending, thereby ensuring the reliability of the flexible aluminum conductive wire body. For example, if the total number of the aluminum wires is 100 and the number of bending times is 10,000, the relationship between a ratio of the area of the overlapping zone between the aluminum wires to the cross-sectional area of the aluminum wire and the number of the broken aluminum wires is shown below in Table 1:

**Table 1: Relationship between a Ratio of the Area of the Overlapping Zone between the Aluminum Wires to the Cross-Sectional Area of the Aluminum Wire and the Number of the Broken Aluminum Wires**

| Ratio of the area of the overlapping zone between the aluminum wires to the cross-sectional area of the aluminum wire (%) | The number of the broken aluminum wires after 10,000 times of bending |
|---|---|
| 1.8 | 8 |
| 1.85 | 6 |
| 1.9 | 6 |
| 1.95 | 5 |
| 2.0 | 4 |
| 2.05 | 2 |
| 2.1 | 2 |
| 2.15 | 1 |
| 2.2 | 2 |

The aluminum conductive core 100 includes the aluminum foil composite structural member 120 which includes a plurality of aluminum foil layers 121, at least part of which are stacked in a same direction.

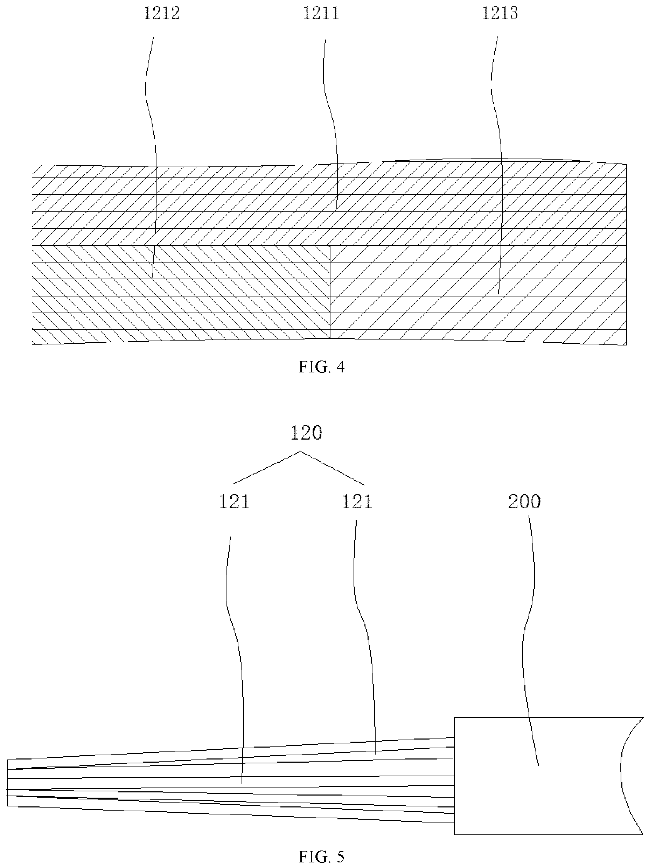

In which, a structure of at least part of the plurality of aluminum foil layers 121 are stacked in the same direction means that as illustrated in FIG. 4 (the section lines in the figure are only for the convenience of distinguishing the three portions, rather than limiting the structure), second aluminum foil layers 1212 are stacked above or below first aluminum foil layers 1211, and third aluminum foil layers 1213 are arranged in parallel with the second aluminum foil layers 1212 and also stacked above or below the first aluminum foil layers 1211; of course, other arrangements are also possible. As illustrated in FIG. 5, all of the aluminum foil layers 121 are stacked in the same direction, that is, the plurality of layers of aluminum foil layers 121 are stacked in the same direction, which is simple in structure and easy to process.

On the basis of the above embodiment, further, the cross section of the aluminum foil composite structural member 120 may be circular or square, etc. The aluminum foil composite structural member 120 is disposed as a flat shape (the cross section shape is waist-shaped, strip-shaped rectangular, or the like), and the insulating layer wrapped outside the aluminum foil composite structural members 120 is corresponding disposed as a flat shape, thereby forming a flat flexible aluminum conductive wire body which can better fit the shell 01 of the automobile and may be applied to sharp bending or a negative angle of a bending radius to maintain a stable shape of the cross section.

According to the shape of the cross section of the aluminum foil composite structural member 120, the specifications of the plurality of aluminum foil layers 121 may be completely different (the length of the aluminum foil layer 121 is determined by the length requirement of the conductive wire body, and the specification of the aluminum foil layer 121 may be understood as the width and the thickness of the aluminum foil); some of the aluminum foil layers 121 may have same specifications, and other aluminum foil layers 121 may have different specifications. The specification of each of the aluminum foil layers 121 is the same, that is, each of the aluminum foil layers 121 has the same width and thickness. The cross section of the aluminum foil composite structural member 120 is disposed as rectangular, which is simple in structure and easy to process.

The area of the overlapping portion between adj acent two of the aluminum foil layers accounts for at least 9.8% of a single surface area (an upper surface area or a lower surface area) of the aluminum foil layer, such as 9.8%, 9.9%, 10%, 30%, 50%, 80% or 100%, etc. Since the area of the overlapping portion between two adjacent aluminum foil layers accounts for at least 9.8% of a single surface area (an upper surface area or a lower surface area) of the aluminum foil layer, the strength of the aluminum conductive core may be ensured, and after multiple times bending, the number of the broken aluminum foil layers is small, thereby ensuring the reliability of the flexible aluminum conductive wire body. For example, if the number of the aluminum foil layers is 100 and the number of bending times is 10,000, the relationship between a ratio of the area of the overlapping portion between two adjacent aluminum foil layers to a single surface area of the aluminum foil layer and the number of the broken aluminum foil layers is shown below in Table 2:

**Table 2: Relationship between a Ratio of the Area of the Overlapping portion between Two Adjacent Aluminum Foil Layers to a Single Surface Area of the Aluminum Foil Layer and the Number of the Broken Aluminum Foil Layers**

| Ratio of the area of the overlapping portion between two adjacent aluminum foil layers to a single surface area of the aluminum foil layer (%) | The number of the broken aluminum foil layers after 10,000 times of bending |
|---|---|
| 2.0 | 31 |
| 3.0 | 25 |
| 4.0 | 26 |
| 5.0 | 26 |
| 6.0 | 22 |
| 7.0 | 18 |
| 8.0 | 12 |
| 9.0 | 8 |
| 9.5 | 3 |
| 9.8 | 1 |
| 9.9 | 0 |
| 10.0 | 0 |

The aluminum conductive core 100 includes both the aluminum foil composite structural member 120 and the aluminum wire composite structural member 110, which are disposed as a flat shape and stacked in a thickness direction of the aluminum conductive core 100.

In which, the aluminum foil composite structural member 120 and the aluminum wire composite structural member 110 are stacked in various structural forms. For example, one layer of the aluminum foil composite structural member 120 and one layer of the aluminum wire composite structural member 110 are alternately disposed in layers; or, the aluminum wire composite structural member 110 (the number of which may be one or more) is stacked on the aluminum foil composite structural member 120 as a whole (the number of which may be one or more), and so on.

The structural forms of the flat aluminum foil composite structural member 120 and the flat aluminum wire composite structural member 120 have been described above and will not be repeated here.

Since the aluminum conductive core 100 is disposed as a flat shape, the insulating layer 200 is correspondingly disposed as a flat shape, that is, the flexible aluminum conductive wire body is disposed as a flat shape, which may be understood as that the flexible conductive wire body is a flexible aluminum flat tape. The flat flexible aluminum conductive wire body can better fit the shell 01 of the automobile, so it may be applied to sharp bending or a negative angle of a bending radius to maintain a stable shape of the cross section.

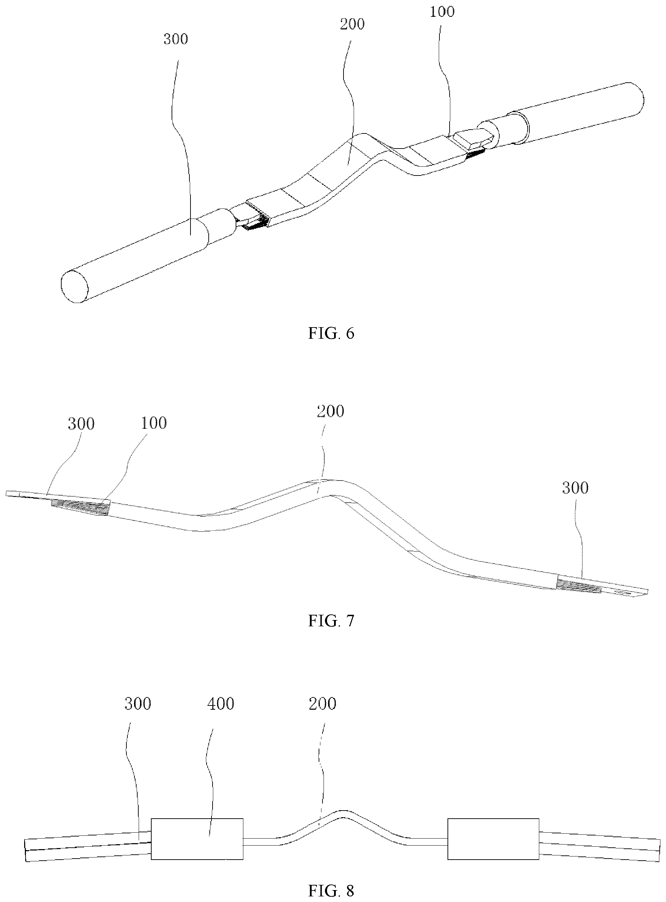

As illustrated in FIGS. 6 to 8, the present disclosure provides a conductive member 04, including a connecting member 300 and the flexible aluminum conductive wire body according to any of the above technical solutions, and the connecting member 300 is connected to an end of the aluminum conductive core 100 in the flexible aluminum conductive wire body. The conductive member 04 according to this embodiment includes the flexible aluminum conductive wire body according to any one of the above technical solutions, and then has all the advantageous technical effects thereof, which will not be repeated here.

In which, the connecting member 300 may be one selected from a copper wire body (a cross section shape of which may be circular, triangular, elliptical, or rhombic, etc.), an aluminum wire body (a cross section of which may be circular, triangular, elliptical, or rhombic, etc.), an aluminum terminal, a copper terminal, an aluminum bar and a copper bar. Either end of the flexible aluminum conductive wire body may be provided with the connecting member 300, and the two connecting members 300 may be the same or different, that is, the two connecting members 300 are the same one selected from the copper wire body, an aluminum wire body, an aluminum terminal, a copper terminal, an aluminum bar and a copper bar (e.g., the two connecting members 300 are both aluminum terminals, copper bars, or the like); or, one of the connecting members 300 is one selected from of a copper wire body, the aluminum wire body, an aluminum terminal, a copper terminal, an aluminum bar and a copper bar, and the other connecting member 300 is another one selected from the copper wire, the aluminum wire, the aluminum terminal, the copper terminal, the aluminum bar and the copper bar (e.g., one of the connecting members is an aluminum wire body and the other connecting member is a copper bar). The flexible aluminum conductive wire body could be connected to a copper member or an aluminum member.

The conductor in the connecting member 300 may be connected to the aluminum conductive core 100 by welding (e.g., ultrasonic welding). When the connecting member 300 is a wire harness with a circular cross section and the aluminum conductive core 100 is a flat shape, a joint of the wire harness is formed as a flat shape to fit the aluminum conductive wire body during welding.

As illustrated in FIG. 8, on the basis of the above embodiments, the conductive member 04 further includes a sealing member 400 which is disposed at a joint between the connecting member 300 and the aluminum conductive core 100, and/or at a position where a conductor of the conductive member 04 is exposed.

In this embodiment, the sealing member 400 may be disposed at a joint between the connecting member 300 and the aluminum conductive core 100, or at a position where a conductor of the conductive member 04 is exposed, or the both. By disposing the sealing member 400, the sealing performance of the conductive member 04 can be improved, and the normal use of the conductive member 04 can be ensured.

In which, the sealing member 400 may directly be configured as a telescopic sleeve or a sheath; or, the sealing member 400 includes a first connecting plate and a second connecting plate which are fixedly connected with a sealing ring disposed therebetween; the first connecting plate is in sealed connection with the connecting member 300 or one side of the exposed conductor; and the second connecting plate is in sealed connection with the flexible aluminum conductive wire body or with the other side of the exposed conductor.

The sealing member 400 may be disposed as needed to achieve a desired sealing level. For example, when the joint between the connecting member 300 and the aluminum conductive core 100 or the position where the conductor of the conductive member 04 is exposed is arranged in a vibration-free dry environment, the sealing member 400 is required to reach a sealing level of IPX3 or above; and when the joint between the connecting member 300 and the aluminum conductive core 100 or the position where the conductor of the conductive member 04 is exposed is arranged in a wet environment, especially a chassis zone of an automobile, the sealing level of the sealing member 400 is required to reach a sealing level of IPX6 or above.

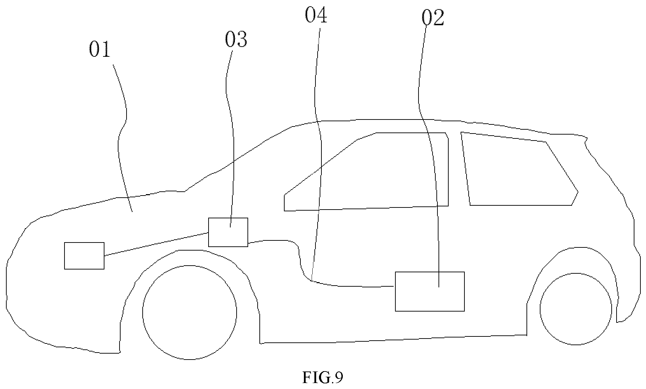

As illustrated in FIG. 9, the present disclosure further provides an automobile including the conductive member 04 according to any one of the above technical solutions. The automobile further includes a shell 01, in which or on which the conductive member 04 is disposed; and a power supply 02 and an electric member 03 with the conductive member 04 connected therebetween. The conductive member 04 adopted by the automobile according to this embodiment is very flexible and convenient for mounting, and the automobile according to this embodiment can be assembled efficiently.

On the basis of the above embodiment, the automobile further includes a fixing member connected between the conductive member 04 and the shell 01, and the fixing member is disposed at a position less than 397.5 mm away from the joint between the connecting member 300 and the aluminum conductive core 100.

In this embodiment, a position less than 397.5 mm (e.g., being 85 mm, 100 mm, 180 mm, or 265 mm) away from the joint between the connecting member 300 and the aluminum conductive core 100 is taken as a fixing point, at which the conductive member 04 is fixedly connected to the shell 01 by the fixing member, thereby ensuring the stability of the joint between the connecting member 300 and the aluminum conductive core 100, and avoiding the affection of connection failure on normal operations of the conductive member.

On the basis of the above embodiments, the automobile further includes a heating portion, and a fixing member is disposed at a position of the shell 01 which is more than 8.05 mm and less than or equal to 500 mm away from the heating portion.

In this embodiment, the conductive member 04 is disposed away from the heating portion (e.g., a heat source such as an engine) on the automobile. The fixing member is disposed at a position more than 8.05 mm and less than or equal to 500 mm (e.g., 8.05 mm, 8.06 mm, 15 mm, 25 mm, 40 mm, 65 mm, 80 mm, 90 mm, 120 mm, 145 mm, 160 mm, 180 mm, 205 mm, 220 mm, 235 mm, 255 mm, 270 mm, 285 mm, 300 mm, 335 mm, 360 mm, 380 mm, 400 mm, 435 mm, 465 mm, 480 mm or 500 mm, etc.) away from the heating portion, and when the conductive member 04 is disposed at the above position, it is possible to prevent the conductive member 04 from being affected by the heat source.

Optionally, the fixing member is disposed at a position more than or equal to 100 mm and less than or equal to 350 mm (e.g., 100 mm, 130 mm, 165 mm, 185 mm, 200 mm, 230 mm, 255 mm, 280 mm, 300 mm, 330mm or 350mm, etc.) from the heating portion. In this way, it is possible to avoid cumbersome mounting caused by too many fixing members on the premise that the conductive member 04 is fixed firmly.

In which, the fixing member in the above technical solution may have various structural forms, such as a buckle; or the fixing member is a connecting piece, a middle part of which is adapted to the shape of the conductive member 04 so as to wrap the conductive member 04, connecting holes are provided at both ends of the connecting piece, so that the connecting piece can be screwed on the shell 01 of the automobile by a fastener (e.g., a bolt or a screw, etc.) through the connecting holes.

Finally, it should be noted that the above embodiments are only used to illustrate, rather than limiting, the technical solutions of the present disclosure. In some embodiments, well-known methods, structures and techniques have not been illustrated in detail so as not to obscure the understanding of the specification.

## Claims

1. A flexible aluminum conductive wire body, comprising an aluminum conductive core (100) and an insulating layer (200) wrapped outside the aluminum conductive core (100);
wherein the aluminum conductive core (100) comprises the aluminum foil composite structural member (120), the aluminum foil composite structural member (120) comprises a plurality of aluminum foil layer (121), at least part of which are stacked in a same direction,
wherein each of the aluminum foil layers (121) has same specifications, and the plurality of aluminum foil layers (121) are stacked in the same direction to form a flat shape,
wherein an area of an overlapping portion between adjacent two of the aluminum foil layers accounts for at least 9.8% of a single surface area of the aluminum foil layer (121);
wherein the aluminum conductive core (100) further comprises the aluminum wire composite structural member (110), the aluminum foil composite structural member (120) and the aluminum wire composite structural member (110) are both disposed as a flat shape, and stacked in a thickness direction of the aluminum conductive core (100), and the aluminum wire composite structural member (110) is a braided tape.

2. The flexible aluminum conductive wire body according to claim 1, wherein the braided tape comprises multiple strands of aluminum wire bundles (113), each of which comprises a plurality of aluminum wires; and the multiple strands of aluminum wire bundles (113) are interwoven with each other to form a flat braided tape.

3. The flexible aluminum conductive wire body according to claim 2, wherein an overlapping zone is formed between two of the aluminum wires interwoven with each other, and an area of the overlapping zone accounts for at least 2.05% of a cross-sectional area of the aluminum wire

4. A conductive member, comprising the flexible aluminum conductive wire body according to any one of claims 1 to 3 and a connecting member (300), the connecting member (300) being connected to an end of the aluminum conductive core (100) in the flexible aluminum conductive wire body.

5. The conductive member according to claim 4, wherein the connecting member (300) is a copper wire body, an aluminum wire body, an aluminum terminal, a copper terminal, an aluminum bar, or a copper bar.

6. The conductive member according to claim 4, further comprising a sealing member (400) disposed at a joint between the connecting member (300) and the aluminum conductive core (100), and/or at a position where a conductor of the conductive member (04) is exposed.

7. A automobile, comprising a shell (01) and the conductive member according to any one of claims 4 to 6, the conductive member (04) being disposed on or in the shell (01), and the shell (01) is an outside body of the automobile.

8. The automobile according to claim 7, further comprising a fixing member connected between the conductive member (04) and the shell (01), and the fixing member is disposed at a position less than 397.5 mm away from a joint between the connecting member (300) and the aluminum conductive core (100).

9. The automobile according to claim 8, further comprising a heating portion, and the fixing member is disposed at a position of the shell (01) which is more than 8.05 mm and less than or equal to 500 mm away from the heating portion.

## Patentansprüche

1. Flexibler leitfähiger Aluminiumdrahtkörper, aufweisend einen leitfähigen Aluminiumkern (100) und eine Isolierschicht (200), die um den leitfähigen Aluminiumkern (100) gewickelt ist;
wobei der leitfähige Aluminiumkern (100) das Aluminiumfolien-Verbundbauteil (120) aufweist, das Aluminiumfolien-Verbundbauteil (120) mehrere Aluminiumfolienschichten (121) aufweist, von denen zumindest ein Teil in derselben Richtung gestapelt ist,
wobei jede der Aluminiumfolienschichten (121) die gleichen Spezifikationen aufweist und die mehreren Aluminiumfolienschichten (121) in derselben Richtung gestapelt sind, um eine flache Form zu bilden,
wobei ein Bereich eines überlappenden Abschnitts zwischen zwei benachbarten Aluminiumfolienschichten mindestens 9,8 % einer einzelnen Oberfläche der Aluminiumfolienschicht (121) ausmacht;
wobei der leitfähige Aluminiumkern (100) des Weiteren das Aluminiumdraht-Verbundbauteil (110) aufweist, wobei das Aluminiumfolien-Verbundbauteil (120) und das Aluminiumdraht-Verbundbauteil (110) beide als flache Form angeordnet und in einer Dickenrichtung des leitfähigen Aluminiumkerns (100) gestapelt sind, und wobei das Aluminiumdraht-Verbundbauteil (110) ein geflochtenes Band ist.

2. Flexibler leitfähiger Aluminiumdrahtkörper gemäß Anspruch 1, bei dem das geflochtene Band mehrere Stränge von Aluminiumdrahtbündeln (113) aufweist, von denen jedes eine Vielzahl von Aluminiumdrähten aufweist; und die mehreren Stränge von Aluminiumdrahtbündeln (113) miteinander verwoben sind, um ein flaches geflochtenes Band zu bilden.

3. Flexibler leitfähiger Aluminiumdrahtkörper gemäß Anspruch 2, bei dem zwischen zwei der miteinander verwobenen Aluminiumdrähte eine Überlappungszone gebildet ist und ein Bereich der Überlappungszone mindestens 2,05 % einer Querschnittsfläche des Aluminiumdrahtes ausmacht.

4. Leitfähiges Element, aufweisend den flexiblen leitfähigen Aluminiumdrahtkörper gemäß einem der Ansprüche 1 bis 3 und ein Verbindungselement (300), wobei das Verbindungselement (300) mit einem Ende des leitfähigen Aluminiumkerns (100) im flexiblen leitfähigen Aluminiumdrahtkörper verbunden ist.

5. Leitfähiges Element gemäß Anspruch 4, bei dem das Verbindungselement (300) ein Kupferdrahtkörper, ein Aluminiumdrahtkörper, ein Aluminiumanschluss, ein Kupferanschluss, eine Aluminiumstange oder eine Kupferstange ist.

6. Leitfähiges Element gemäß Anspruch 4, das des Weiteren ein Dichtungselement (400) aufweist, das an einer Verbindungsstelle zwischen dem Verbindungselement (300) und dem leitfähigen Aluminiumkern (100) und/oder an einer Stelle angeordnet ist, an der ein Leiter des leitfähigen Elements (04) freiliegt.

7. Kraftfahrzeug, aufweisend eine Karosserie (01) und das leitfähige Element gemäß einem der Ansprüche 4 bis 6, wobei das leitfähige Element (04) an oder in der Karosserie (01) angeordnet ist und die Karosserie (01) ein Außenkörper des Kraftfahrzeugs ist.

8. Kraftfahrzeug nach Anspruch 7, das des Weiteren ein Befestigungselement aufweist, das zwischen dem leitfähigen Element (04) und der Karosserie (01) verbunden ist, wobei das Befestigungselement an einer Position angeordnet ist, die weniger als 397,5 mm von einer Verbindungsstelle zwischen dem Verbindungselement (300) und dem leitfähigen Aluminiumkern (100) entfernt ist.

9. Kraftfahrzeug nach Anspruch 8, das des Weiteren einen Heizabschnitt aufweist, wobei das Befestigungselement an einer Position der Karosserie (01) angeordnet ist, die mehr als 8,05 mm und weniger als oder gleich 500 mm von dem Heizabschnitt entfernt ist.

## Revendications

1. Corps de fil conducteur en aluminium flexible, comprenant un noyau conducteur en aluminium (100) et une couche isolante (200) enroulée autour du noyau conducteur en aluminium (100);
le noyau conducteur en aluminium (100) comprenant l'élément composite en feuille d'aluminium (120), l'élément composite en feuille d'aluminium (120) comprenant plusieurs couches de feuille d'aluminium (121), dont au moins une partie est empilée dans la même direction,
chacune des couches de feuille d'aluminium (121) ayant les mêmes spécifications, et les multiples couches de feuille d'aluminium (121) étant empilées dans la même direction pour former une forme plate,
une zone de chevauchement entre deux couches de feuille d'aluminium adjacentes représentant au moins 9,8 % d'une surface individuelle de la couche de feuille d'aluminium (121);
le noyau conducteur en aluminium (100) comprenant en outre l'élément composite en fil d'aluminium (110), l'élément composite en feuille d'aluminium (120) et l'élément composite en fil d'aluminium (110) étant tous deux agencés sous une forme plate et empilés dans une direction d'épaisseur du noyau conducteur en aluminium (100), et dans lequel l'élément composite en fil d'aluminium (110) est une bande tressée.

2. Corps de fil conducteur en aluminium flexible selon la revendication 1, dans lequel la bande tressée comprend plusieurs brins de faisceaux de fils d'aluminium (113), chacun comprenant une pluralité de fils d'aluminium; et les plusieurs brins de faisceaux de fils d'aluminium (113) sont entrelacés les uns avec les autres pour former une bande tressée plate.

3. Corps de fil conducteur en aluminium flexible selon la revendication 2, dans lequel une zone de chevauchement est formée entre deux des fils d'aluminium entrelacés, et une partie de la zone de chevauchement représente au moins 2,05 % d'une section transversale du fil d'aluminium.

4. Élément conducteur comprenant le corps de fil conducteur en aluminium flexible selon l'une des revendications 1 à 3 et un élément de connexion (300), l'élément de connexion (300) étant connecté à une extrémité du noyau conducteur en aluminium (100) dans le corps de fil conducteur en aluminium flexible.

5. Élément conducteur selon la revendication 4, dans lequel l'élément de connexion (300) est un corps de fil de cuivre, un corps de fil d'aluminium, une connexion en aluminium, une connexion en cuivre, une tige en aluminium ou une tige en cuivre.

6. Élément conducteur selon la revendication 4, qui comprend en outre un élément d'étanchéité (400) disposé à un point de connexion entre l'élément de connexion (300) et le noyau conducteur en aluminium (100) et/ou à un endroit où un conducteur de l'élément conducteur (04) est exposé.

7. Véhicule automobile comprenant une carrosserie (01) et l'élément conducteur selon l'une des revendications 4 à 6, dans lequel l'élément conducteur (04) est disposé sur ou dans la carrosserie (01) et la carrosserie (01) est un corps extérieur du véhicule automobile.

8. Véhicule automobile selon la revendication 7, qui comprend en outre un élément de fixation relié entre l'élément conducteur (04) et la carrosserie (01), l'élément de fixation étant disposé à un emplacement situé à moins de 397,5 mm d'un point de jonction entre l'élément de connexion (300) et le noyau conducteur en aluminium (100).

9. Véhicule automobile selon la revendication 8, qui comprend en outre une section de chauffage, l'élément de fixation étant disposé à une position de la carrosserie (01) qui est à plus de 8,05 mm et à moins de ou égale à 500 mm de la section de chauffage.
